# EUROPÄISCHE PATENTSCHRIFT

(11) **EP 0 411 518 B1**
(45) Veröffentlichungstag und Bekanntmachung des Hinweises auf die Patenterteilung: **22.12.1993**
(21) Anmeldenummer: 90114550.8
(22) Anmeldetag: 28.07.1990
(51) Int. Cl.: G01F 1/68, G01P 5/12

(54) **Messeinrichtung zum Bestimmen des Luftmassenstroms**
Measuring system to determine air mass flow
Système de mesure pour déterminer le débit massique de l'air

(30) Priorität: 03.08.1989 DE 3925644
(43) Veröffentlichungstag der Anmeldung: 06.02.1991
(73) Patentinhaber: Sass, Wolfgang, D-50181 Bedburg (DE)
(72) Erfinder: Sass, Wolfgang, D-50181 Bedburg (DE)

(56) Entgegenhaltungen:
- WO-A-87/07716
- DE-A- 3 518 409
- N.T.I.S. TECH NOTES Nr. 11, November 1985, Teil J, Seite 1338, Springfield, Virginia, US; "Constant-Operating-Resistance Hot-Wire Probe"

## Beschreibung

Die Erfindung betrifft eine Meßeinrichtung gemäß dem Oberbegriff von Anspruch 1.

Es ist bekannt, Luftmassenströme beispielsweise mit Hitzdrahtsensoren, Heißfilmelementen und Strömungssonden zu bestimmen. Problematisch ist hierbei im allgemeinen, daß komplizierte Abgleichvorgänge an der Elektronik erforderlich sind und keine direkte Austauschbarkeit der Meßsensoren besteht.

Der vorliegenden Erfindung liegt die Aufgabe zugrunde, eine Meßeinrichtung der genannten Art so auszubilden, daß ein einfaches und zuverlässiges Erfassen des Luftmassenstroms möglich ist. Insbesondere sollen komplizierte Abgleichvorgänge hinsichtlich der Temperaturkompensation vermieden werden, und es ist eine direkte Austauschbarkeit der Sensoren erwünscht.

Zur Lösung der gestellten Aufgabe zeichnet sich eine Meßeinrichtung der im Oberbegriff von Anspruch 1 genannten Art erfindungsgemäß durch die im Kennzeichen dieses Anspruchs aufgeführten Merkmale aus. Dabei ist der Widerstand so aufgebaut, daß bei großen Temperaturdifferenzen, die durch das Heizen auftreten, keine oder nur geringe Widerstandsänderungen auftreten. Zu diesem Zweck kann der Widerstand beispielsweise aus Manganin bestehen. Mit den beiden Meßgliedern und der hiervon gesteuerten Heizstromquelle für den Widerstand wird erreicht, daß dieser zuverlässig eine bestimmte Übertemperatur erreicht. Die Größe und/oder die mittlere Einschaltdauer des Heizstroms ergibt die Meßgröße für den Luftstrom. Komplizierte Abgleichvorgänge hinsichtlich der Temperaturkompensation entfallen hierbei. Eine solche Meßeinrichtung ist ausgesprochen einfach, zuverlässig und leicht zu handhaben. Die Meßsensoren, das heißt der Widerstand und die beiden Meßglieder, sind dabei direkt austauschbar.

Die Weiterbildungen der Ansprüche 2 bis 4 sind äußerst zweckmäßig, da sich mit den beiden, gegeneinander in Reihe geschalteten Thermoelementen sehr leicht und zuverlässig die jeweilige Temperaturdifferenz zwischen dem beheizten Widerstand und dem Luftstrom erfassen läßt, und zwar auch dann, wenn schnelle diesbezügliche Temperaturänderungen auftreten.

Die Weiterbildung von Anspruch 5 ermöglicht eine zuverlässige Signalverarbeitung auch dann, wenn die der Heizstromquelle zugeführte und die Temperaturdifferenz repräsentierende Istwert-Betriebseingangsspannung klein ist.

Gemäß der Weiterbildung von Anspruch 6 ermöglicht der Istwert-Sollwert-Vergleicher durch entsprechendes Vorgeben des Sollwertes eine bedarfsgerechte Anpassung der erwünschten Übertemperatur des Widerstands und einen ständigen Vergleich, so daß die Übertemperatur weitgehend eingehalten werden kann.

Mit den Weiterbildungen der Ansprüche 7 und 8 ist es möglich, den Heizstrom für den Widerstand in Abhängigkeit von dem Abweichungssignal des Istwert-Sollwert-Vergleichers kontinuierlich zu regeln. Während bei ruhendem Luftstrom eine gewisse Mindestbeheizung erforderlich ist, damit sich die erwünschte Übertemperatur einstellt, steigt der Heizstrom im Falle eines bewegten Luftstroms mehr oder weniger stark. Eine spannungsgesteuerte Stromquelle stellt dabei ein einfaches Mittel zum Beheizen des Widerstands dar.

Statt einer kontinuierlichen Regelung der Größe des Heizstroms ermöglicht die Weiterbildung gemäß den Ansprüchen 9 und 10 ein intermittierendes Schalten eines amplitudenmäßig konstanten Heizstroms. Dabei ergibt das Tastverhältnis des Heizstroms ein Maß für den Luftstrom. Bei ansteigendem Luftstrom steigt auch die mittlere Einschaltzeit des Heizstroms. Mit dem Schmitt-Trigger läßt sich eine gewisse Beruhigung der Schaltvorgänge dadurch erzielen, daß kleine Schwankungen der Übertemperatur zugelassen werden.

Mit den Weiterbildungen der Ansprüche 12 bis 14 ist es zum einen möglich, für die Heizstromquelle größere Istwert-Betriebseingangsspannungen zu erzeugen. Zum anderen ist hierdurch eine Mitteilung der Temperaturverläufe am Widerstand bzw. im Luftstrom möglich, wodurch sich positionsabhängige Temperaturfehler ausgleichen lassen.

Ein weiterer Vorteil der erfindungsgemäßen Meßeinrichtung besteht in der Störunterdrückung von leitungsgebundenen Störungen. Diese treffen zwar auf den Widerstand auf, bewirken jedoch keine Aufheizung desselben. Erfindungsgemäß werden nur thermische und keine elektrische Größen erfaßt. Da es sich bei dem Widerstand um einen Festwiderstand handeln soll, also nicht wie bei üblichen Meßbrükken temperaturabhängige Widerstände zu verwenden sind, und da die Temperaturerfassung mit den Meßgliedern bzw. Thermoelementen sehr genau erfolgen kann, sind die sonst bekannten Temperaturabgleichprobleme im vorliegenden Fall praktisch ausgeschaltet.

Die Erfindung wird nachfolgend an zeichnerisch dargestellten Ausführungsbeispielen näher erläutert. Es zeigen:
- Figur 1 -: eine erste Meßeinrichtung nach der vorliegenden Erfindung mit einer kontinuierlichen Regelung des Heizstroms,
- Figur 2 -: eine zweite Meßeinrichtung nach der vorliegenden Erfindung mit einer schaltenden Regelung des Heizstroms und
- Figur 3 -: einen beheizten Widerstand in Verbindung mit mehreren, hintereinandergeschalteten Paaren von Meßgliedern in Form von Thermoelementen.

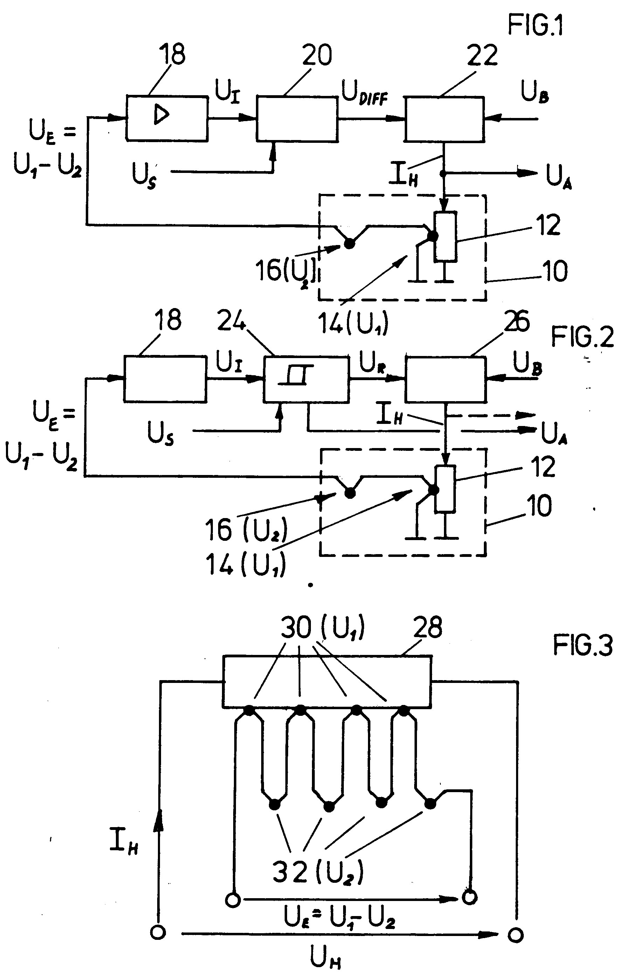

Gemäß den Figuren 1 und 2 besteht eine in dem zu messenden Luftstrom anzuordnende Meßeinheit 10 aus einem zu beheizenden ohmschen Widerstand 12 in Form eines weitgehend temperaturunabhängigen Festwiderstands (z. B. aus Manganin), ferner einem ersten Meßglied bzw. Thermoelement 14 unmittelbar am Festwiderstand 12 und einem zweiten Meßglied bzw. Thermoelement 16 im Luftstrom. Das Thermoelement 14 erzeugt eine die Temperatur des Widerstands 12 repräsentierende Temperaturgröße in Form eines Spannungssignals U₁. Das Thermoelement 16 erzeugt eine die Temperatur des Luftstroms repräsentierende Temperaturgröße in Form eines Spannungssignals U₂. Die Thermoelemente 14, 16 sind elektrisch in Reihe und gegeneinander geschaltet, so daß die Spannungsdifferenz U₁ - U₂ als die Übertemperatur des Widerstands 12 repräsentierende Istwert-Betriebseingangsspannung U_{E} zum Eingang der Heizstromquelle gelangt, nämlich im vorliegenden Fall zu einem Eingangsverstärker 18 derselben.

Bei der Ausführungsform aus Figur 1 ist an den Signalverstärker 18 ein Istwert-Sollwert-Vergleicher 20 angeschlossen, der einen vorgegebenen oder einstellbaren Sollwert U_{S} mit einem Istwert U_{I} vom Ausgang des Signalverstärkers 18 vergleicht und am Ausgang ein diesbezügliches Abweichungssignal U_{Diff} erzeugt. Dieses kann eine von der Differenz U_{S} - U_{I} abhängige Spannung sein, die zu einem Heizstromregelglied 22 gelangt. Dieses ist als spannungsgesteuerte Stromquelle ausgebildet, die an einer Versorgungsspannung U_{B} liegt und den Widerstand 12 mit einem von dem Abweichungssignal abhängigen Heizstrom I_{H} versorgt. Die jeweilige Größe des Heizstroms I_{H} ist ein Maß für den Luftstrom. Da der Widerstand 12 konstant ist, kann die Ausgangsspannung U_{A} am Meßwiderstand 12 als Maß für den Heizstrom I_{H} und damit für den Luftstrom verwertet werden.

Bei der Ausführungsform aus Figur 2 ist an den Ausgang des Eingangsverstärkers 18 ein Istwert-Sollwert-Vergleicher in Form eines Schmitt-Triggers 24 angeschlossen, dem einerseits vom Eingangsverstärker 18 ein Istwert U_{I} und andererseits ein bestimmter Schwell- oder Sollwert U_{S} zugeführt werden. Das Ausgangssignal des Schmitt-Triggers stellt ein regelndes Schaltsignal U_{R} dar, mit dem ein Heizstromregelglied 26 in Form einer geschalteten Stromquelle angesteuert wird. Diese liegt an einer Versorgungsspannung U_{B} und versorgt den Widerstand 12 mit einem amplitudenmäßig konstanten Heizstrom I_{H} immer dann, wenn der Schaltzustand des Schmitt-Triggers einen Heizvorgang vorschreibt. Das Tastverhältnis bzw. die mittlere Einschaltdauer des Heizstroms I_{H} stellt ein Maß für den Luftstrom dar und kann als Ausgangsspannung U_{A} am Istwert-Sollwert-Vergleicher 24 oder gemäß der gestrichelten Darstellung am Widerstand 12 abgenommen werden.

Figur 3 zeigt eine Modifikation der Meßeinheit 10. Diese weist im vorliegenden Fall einen ebenfalls als Festwiderstand ausgebildeten, beheizten Widerstand 28 auf. Diesem wird mittels einer Heizspannung U_{H} ein Heizstrom I_{H} zugeführt, der wie bei Figur 1 kontinuierlich geregelt oder wie bei Figur 2 geschaltet werden kann. Der wesentliche Unterschied besteht darin, daß mehrere Paare von elektrisch hintereinandergeschalteten ersten Meßgliedern bzw. Thermoelementen 30 und zweiten Meßgliedern bzw. Thermoelementen 32 vorgesehen sind. Die Thermoelemente 30 sind über die Länge des Widerstands 28 verteilt, der beispielsweise quer zum Luftstrom angeordnet ist. Die Thermoelemente 32 befinden sich an entsprechenden Positionen im Luftstrom (vom Widerstand 28 örtlich und thermisch getrennt) und können ebenfalls quer zum Luftstrom hintereinander angeordnet sein. Auf diese Weise lassen sich örtliche Temperaturunterschiede sowie Meßfehler ausgleichen und durch die elektrische Hintereinanderschaltung größere Istwert-Betriebseingangsspannungen für die Heizquelle bzw. den Eingangsverstärker 18 erzielen.

Da der beheizte Widerstand 12 bzw. 28 ein Festwiderstand ist und stets auf eine bestimmte Übertemperatur aufgeheizt wird, die mit den Thermoelementen und den übrigen Maßnahmen leicht einzuhalten ist, lassen sich genaue Betriebsergebnisse einfach erreichen. Die Einzelteile der Meßeinheit 10 lassen sich direkt austauschen, ohne daß komplizierte Abgleichvorgänge erforderlich sind. Da sich ferner auch leitungsgebundene Störungen unterdrücken lassen, weil nur thermische, und keine elektrischen Größen erfaßt werden, eignet sich eine solche Meßeinrichtung insbesondere auch für Kraftfahrzeuge.

## Patentansprüche

1. Meßeinrichtung, insbesondere für Kraftfahrzeuge, zum Bestimmen des Luftmassenstroms mit einem einem Luftstrom aussetzbaren und mittels einer elektrischen Heizstromquelle aufheizbaren ohmschen Widerstand, wobei eine den Heizvorgang repräsentierende Kenngröße als Meßgröße für den Luftmassenstrom dient,
**dadurch gekennzeichnet,**
a) daß die Widerstandsgröße des Widerstands (12) zumindest weitgehend temperaturunabhängig ist,
b) daß dem Widerstand ein seine momentane Betriebstemperatur erfassendes erstes Meßglied (14) zugeordnet ist,
c) daß eine erste Temperaturgröße (U₁) des ersten Meßgliedes (14) zusammen mit einer zweiten Temperaturgröße (U₂) eines die momentane Temperatur des Luftstroms erfassenden zweiten Meßglieds (16) als Betriebseingangsgröße (U_{E}) zu der Heizstromquelle (18, 20, 22; 18, 24, 26) für den Widerstand gelangt,
d) daß die Heizstromquelle den Heizstrom (I_{H}) für den auf eine weitgehend konstante Übertemperatur aufzuheizenden Widerstand (12) in Abhängigkeit von der Differenz (U₁ - U₂) der Temperaturgrößen (U₁, U₂) regelt und
e) daß die Größe und/oder die mittlere Einschaltdauer des Heizstroms (I_{H}) als Meßgröße für den Luftstrom dient.

2. Meßeinrichtung nach Anspruch 1, dadurch gekennzeichnet, daß das erste Meßglied (14) als ein mit dem Widerstand (12) thermisch leitend verbundenes erstes Thermoelement ausgebildet ist.

3. Meßeinrichtung nach Anspruch 2, dadurch gekennzeichnet, daß das zweite Meßglied (16) als ein vom Widerstand (12) körperlich und thermisch getrenntes, dem Luftstrom auszusetzendes zweites Thermoelement ausgebildet ist.

4. Meßeinrichtung nach Anspruch 2 und 3, dadurch gekennzeichnet, daß die Thermoelemente (14, 16) elektrisch in Reihe gegeneinander geschaltet sind und daß die die Temperaturdifferenz repräsentierende Ausgangsspannung (U₁ - U₂) der Reihenschaltung als Istwert-Betriebseingangsspannung (U_{E}) am Eingang der Heizstromquelle anliegt.

5. Meßeinrichtung nach einem der Ansprüche 1 bis 4, dadurch gekennzeichnet, daß am Eingang der Heizstromquelle ein Signalverstärker (18) angeordnet ist.

6. Meßeinrichtung nach einem der Ansprüche 1 bis 5, dadurch gekennzeichnet, daß die Heizstromquelle einen, vorzugsweise an einen eingangsseitigen Signalverstärker (18) angeschlossenen, Istwert-Sollwert-Vergleicher (20, 24) und ein hieran angeschlossenes Heizstromregelglied (22, 26) aufweist.

7. Meßeinrichtung nach Anspruch 6, dadurch gekennzeichnet, daß der Istwert-Sollwert-Vergleicher (20) ein die Abweichung zwischen einem eingangsseitigen Istwert (U_{I}) sowie einem vorgegebenen Sollwert (U_{S}) repräsentierendes Abweichungssignal (U_{Diff}) für das Heizstromregelglied (22) erzeugt und das letztere die Größe des Heizstroms (I_{H}) in Abhängigkeit von dem Abweichungssignal kontinuierlich regelt.

8. Meßeinrichtung nach Anspruch 7, dadurch gekennzeichnet, daß das Heizstromregelglied (22) als spannungsgesteuerte Stromquelle ausgebildet ist.

9. Meßeinrichtung nach Anspruch 6, dadurch gekennzeichnet, daß der Istwert-Sollwert-Vergleicher (24) mit einer den Sollwert (U_{S}) repräsentierenden sowie mit einem eingangsseitigen Istwert (U_{I}) zu vergleichenden Schaltschwelle ausgebildet ist und bei Über- oder Unterschreitung der Schaltschwelle ein zum Heizstromregelglied (24) gelangendes Schaltsignal (U_{R}) erzeugt, durch das der amplitudenmäßig konstante Heizstrom (I_{H}) ein- und ausgeschaltet wird.

10. Meßeinrichtung nach Anspruch 9, dadurch gekennzeichnet, daß der Istwert-Sollwert-Vergleicher (24) als ein Schmitt-Trigger und das Heizstromregelglied (26) als eine geschaltete Stromquelle ausgebildet sind.

11. Meßeinrichtung nach einem der Ansprüche 1 bis 10, dadurch gekennzeichnet, daß die Größe des Spannungsabfalls am Widerstand (12) oder das Tastverhältnis des Heizstroms (I_{H}) als ausgangsseitige Meßgröße (U_{A}) dient.

12. Meßeinrichtung nach einem der Ansprüche 1 bis 11, dadurch gekennzeichnet, daß mehrere Meßglied-Paare von ersten sowie zweiten Meßgliedern (30, 32) bzw. Thermoelementen an unterschiedlichen Widerstands- sowie Luftstrompositionen vorgesehen und elektrisch hintereinander geschaltet sind.

13. Meßeinrichtung nach Anspruch 12, dadurch gekennzeichnet, daß die Meßglied-Paare über die Länge des Widerstands (12) verteilt angeordnet sind.

14. Meßeinrichtung nach Anspruch 13, dadurch gekennzeichnet, daß die Meßglied-Paare quer zum Luftstrom hintereinander angeordnet sind.

## Claims

1. Measuring device, especially for motor vehicles, to determine airflow with a in a airstream located and by a electrical heating current source heated ohmic resistor, whereby a heating process represented characteristic value as measuring value for the airflow is used,
characterised in that way:
a) that the resistance value of the resistor 12 is nearly temperature independent.
b) that the to the resistors working temperature is related to the first measuring element,
c) that the first temperature value ( U₁) of the first measuring element 14 together with a second temperature value (U₂) of a current temperature of airflow is measured as actual value (U_{E}) for the heating current source ( 18,21,22; 18,24,26) of the resistor.
d) that the heating current source controls the heating current (I_{H}) for the nearly constant overtemperature heated resistor 12 depending to the difference (U₁-U₂) of the temperature values (U_{1,}U₂) and
e) the value and/or the average switching time of the heating current (I_{H}) is a measure of airflow.

2. Measuring device according to claim 1, comprising a first measuring element 14 which is thermal coupled to a resistor 12 and designed as a first thermocouple.

3. Measuring device according to claim 2, designed as a second measuring element 16 as a physically from the resistor 12 de coupled, and airstreamed second thermocouple.

4. Measuring device according to claim 2 and 3, wherein said that the thermocouples (14,16) are connected electrically reciprocally in series and that the temperature representing output voltage (U1-U2) of the series connection is used as a actual input voltage (U_{E})at the input of the heating current source.

5. Measuring device according to claim 1 to 5, wherein a signal amplifier 18 is located at the input of the heating current source.

6. Measuring device according to claim 1 to 5, wherein a heating current source, preferably is connected to a at the input located signal amplifier 18, a comparator (20,24) and also is connected to a heating control element (22,26).

7. Measuring device according to claim 6, wherein said that the comparator 20 produces a differential signal (U_{Diff.}) out of a actual input value (U_{I}) and a defined control value (U_{S}) for the heating current control element and the latter controls the volume of the heating current (U_{H}) in dependence to the differential signal.

8. Measuring device according to claim 7, wherein said that the heating current control element 22 is a voltage controlled current source.

9. Measuring device according to claim 6, wherein the comparator 24 is designed with a to the control value (U_{S}) as well as to an actual input value (U_{I}) representing comparing threshold and by crossing the comparing threshold produces a switching signal (U_{R}) which is lead to the heating current control element, whereby the constant heating current (I_{H}) is switched on and off.

10. Measuring device according to claim 9, wherein the comparator 24 is a Schmitt trigger and the heating current control element 26 is a switched current source.

11. Measuring device according to claim 1 to 10, wherein the value of voltage drop at the resistor 12 or the pulse rate repetition ratio of the heating current (I_{H}) is used as an output measuring value (U_{A}).

12. Measuring device according to claim 1 to 11, wherein several measuring element pairs from the first as well as the second measuring elements ( 30,32), respectively thermocouples, are located in different resistor and airstream positions and are connected electrically in series.

13. Measuring device according to claim 12, wherein the measuring element pairs are located over the length of resistor 12.

14. Measuring device according to claim 13, wherein the measuring element pairs are located crosswise to the airflow.

## Revendications

1. Dispositif de mesure, particulièrement apte pour véhicules automobiles, pour mesurer le courant d'air avec une résistance ohmique qui peut être echauffée par une source électrique de courant de chauffage et exposée à l'influence d'un courant d'air, à quoi une identification caractéristique représentant le processus de chauffage sert de dimension pour le courant d'air.
Le dispositif est caracterisé en ce
a) que la dimension de la résistance (12) est du moins largement indépendant de la température,
b) qu'un premier élément de mesure (14) est attribué à la résistance pour enregistrer sa température de service momentanée.
c) qu'un premier dimension de température (U₁) du premier élément de mesure (14) ensemble avec une seconde dimension de température (U₂) d'un second élément de mesure qui enregistre la température momentanée du courant d'air (U₂) parviennent à la source de courant de chauffage pour la résistance (18, 20, 22; 18, 24, 26) en forme d'une dimension à l'entrée (U_{E}).
d) que la source du courant de chauffage régle le courant de chauffage (I_{H}) pour la résistance (12) qui doit être echaufée à une surtempérature largement constante dependant de la différence (U₁ - U ₂) des dimensions de température (U₁, U₂) et
e) que la dimension et/ou la durée moyenne de fonctionnement du courant de chauffage (I_{H}) sert de dimension pour le courant d'air.

2. Dispositif selon la revendication 1, caracterisé par un premier élément destiné à mesurer (14) en forme d'un premier élément thermique relié avec la résistance (12) en connexion conductrice thermique.

3. Dispositif selon la revendication 2, caracterisé en ce que le second élément de mesure (16) est en forme d'un élément thermique separé de la résistance localement et thermiquement et qui peut être exposé au courant d'air.

4. Dispositif selon les revendications 2 et 3, caracterisé en ce que les éléments thermiques (14, 16) sont montés opposés en série et dont la tension de sortie de la couplage en série représentant la différence de température (U₁ - U₂) adhére uniformement à l'entrée de la source du courant de chauffage en forme de la valeur éffective de la tension à l'entrée.

5. Dispositif selon l'une des revendications 1 à 4, caracterisé par un amplificateur de signaux (18) placé à l'entrée du source de courant de chauffage.

6. Dispositif selon l'une des revendications 1 à 5, caracterisé en ce que la source du courant de chauffage présente un comparateur de la valeur éffective et la valeur théoretique (20, 24), connecté de l'entrée avantageusement à un amplificateur de signeaux (18), et un élément fonctionnel du régulateur (22, 26) connecté au comparateur.

7. Dispositif selon la revendication 6, caracterisé en ce que le comparateur de la valeur éffective et la valeur théoretique (20) produit un signal de différence (U_{Diff}) représentant la différence entre la valeur éffective de l'entrée (U_{I}) et un valeur théoretique (U_{S}) pour l'élément fonctionnel du régulateur (22) et dont cet élément régle continuellement la dimension du courant de chauffage (I_{H}) en fonction du signal de différence.

8. Dispositif selon la revendication 7, caracterisé par un élément fonctionnel du régulateur (22) en forme d'une source de courant commandée en tension.

9. Dispositif selon la revendication 6, caracterisé en ce que le comparateur de la valeur éffective et la valeur théoretique (24) est équipé d'un seuil de commutation représentant la valeur théoretique (U_{S}) aussi que la valeur éffective de l'entrée (U_{I}) et qu'il produit un signal (UR)qui parvient à l'élément fonctionnel du régulateur (24) en ce cas que le courant soit inférieur ou supérieur au seuil de commutation avec lequel le circuit du courant de chauffage d'amplitude constante peut être connecté ou déconnecté.

10. Dispositif selon la revendication 9, caractérisé en ce que le comparateur de la valeur éffective et la valeur théoretique (24) est en forme d'un trigger de Schmitt et l'élément du courant de chauffage (26) est en forme d'un courant de chauffage monté.

11. Dispositif selon l'une des revendications 1 à 10, caracterisé en ce que la dimension de la chute de tension à la résistance (12) ou le rapport durée de passage de courant de chauffage (I_{H}) pendant le cycle sert de dimension de sortie. (U_{A}).

12. Dispositif selon l'un des revendications 1 a 11, caracterisé en ce que plusieurs pairs d'éléments de mesure de premiers ou seconds éléments
(30, 32) respectivement d'éléments thermiques sont prévus dans positions différentes de la résistance et le courant d'air et qu'ils sont montés en série.

13. Dispositif selon la revendication 12, caracterisé en ce que les pairs d'éléments sont distribués de longue de la résistance (12).

14. Dispositif selon la revendication 13 caracterisé en ce que les pairs d'éléments de mesure sont placés en série en travers du courant d'air.
